# EUROPEAN PATENT APPLICATION

(11) **EP 3 372 873 A1**
(43) Date of publication of application: **12.09.2018**
(21) Application number: 16861996.3
(22) Date of filing: 27.10.2016
(51) Int. Cl.: F16J 15/18, F16B 21/18

(54) **STRUCTURE AND METHOD FOR FIXING SEALING MEMBER**

(30) Priority: 02.11.2015 JP 2015215444
(71) Applicant: Nitta Corporation, Osaka-shi, Osaka 556-0022 (JP)
(72) Inventor: AOKI, Yasuhiro, Yamatokohriyama-shi Nara 639-1085 (JP)
(74) Representative: Viering, Jentschura & Partner mbB Patent- und Rechtsanwälte
(86) International application number: PCT/JP2016/081853
(87) International publication number: WO 2017/077935

(57) **Abstract**

A structure for fixing a sealing material 1 is intended to seal a gap between a hole 3 of a structure 2 and a shaft 4 designed to be inserted into the hole 3. A groove 6 for fitting the sealing material is formed on an inner circumferential surface of the hole 3 of the structure 2. An outer peripheral part of the sealing material 1 and a retaining ring 7 are inserted in this order from an opening end 31 side of the hole 3 into the groove 6. The groove 6 includes an inclined surface 61 on the opening end 31 side of the hole 3 so that a width along a longitudinal direction of the hole 3 decreases in a direction from a groove upper part located close to the circumferential surface of the hole 3 toward a groove bottom surface.

## Description

### TECHNICAL FIELD

The present invention relates to structure and method for fixing a sealing material which are intended to seal a gap between a hole of a structure and a shaft designed to be inserted into the hole.

### BACKGROUND ART

In a system in which a bar-shaped shaft performing a linear motion guide and serving as a rotating body is inserted into a hole of a structure, such as a machine apparatus, it has conventionally been necessary to seal a gap between an inner circumferential surface of the hole and the shaft in order to prevent ingress and discharge of foreign matter, such as dust. Therefore, a sealing material is usually fitted into the gap between the inner circumferential surface of the hole and the shaft. While several methods for fixing the sealing material have been known, some representative methods are described as follows.
(1) A sealing material, in which an elastic material having sealing property and a metal material ensuring rigidity are integrated with each other, is engagedly fixed to a structure (machine) side.
(2) A case accommodating a sealing material therein is manufactured using metal or the like, and the sealing material is fixed to a structure with the case interposed therebetween.
(3) A sealing material is held between metal plates or the like, and the sealing material is fixed to a structure by a bolt.

### PRIOR ART DOCUMENTS

### PATENT DOCUMENTS

Patent Document 1: Japanese Patent No. 4934943
Patent Document 2: Japanese Patent No. 4780577
Patent Document 3: Japanese Unexamined Patent Publication No. 2003-148493
Patent Document 4: Japanese Unexamined Patent Publication No. 2005-226686
Patent Document 5: Japanese Unexamined Patent Publication No. 2006-242229

### SUMMARY OF THE INVENTION

### PROBLEMS TO BE SOLVED BY THE INVENTION

The above sealing materials, however, have the problems of a complicated structure, a large number of components, and taking labor and time to fix the sealing material.

While the elastic material is usually used as the sealing material, the elastic material may be subjected to creep deformation due to long-term use, and it may be therefore difficult to ensure sealing property over a long period of time.

The present invention aims at providing structure and method for fixing a sealing material which make it possible to easily fix the sealing material in spite of having a simple structure, and also ensure sealing property over a long period of time.

### MEANS FOR SOLVING THE PROBLEMS

The inventor of the present invention has completed the present invention as a result of intensive studies for solving the above problems. Specifically, the structure for fixing a sealing material is intended to seal a gap between a hole of a structure and a shaft designed to be inserted into the hole. The structure includes a groove, a sealing material, and a retaining ring. The groove is formed on a circumferential surface of the hole of the structure, and is designed for fitting the sealing material. An outer peripheral part of the sealing material is inserted into the groove. The retaining ring is inserted into the groove into which the outer peripheral part of the sealing material is inserted. The groove includes an inclined surface on the opening end side of the hole so that a width along a longitudinal direction of the hole decreases in a direction from a groove upper part located close to the circumferential surface of the hole toward a groove bottom surface.

The method for fixing a sealing material of the present invention includes forming a groove on a circumferential surface of the hole of the structure; and inserting an outer peripheral part of the sealing material and a retaining ring in this order from an opening end side of the hole of the structure into the groove. The groove includes an inclined surface on the opening end side of the hole so that a width along a longitudinal direction of the hole decreases in a direction from a groove upper part located close to the circumferential surface of the hole toward a groove bottom surface.

### EFFECTS OF THE INVETION

With the present invention, the outer peripheral part of the sealing material and the retaining ring are inserted in this order into the groove provided on an inner circumferential surface of the structure. On this occasion, because a groove inner surface located close to the opening end of the hole is formed into a slope shape, the retaining ring moves toward the sealing material and presses the sealing material against the structure. It is therefore easy to fix the sealing material, and the sealing material itself may only need a simple structure. Even when the sealing material is subjected to thickness variation due to creep deformation, the retaining ring is pressing the sealing material against the structure, thus ensuring sealing property over a long period of time.

### BRIEF DESCRIPTION OF THE DRAWINGS

FIG. 1 is a schematic sectional view showing a structure for fixing a sealing material in one embodiment of the present invention;
FIG. 2 is a partially enlarged sectional view of FIG. 1;
FIGs. 3(a) to 3(c) are plan views each showing an example of retaining rings in the present invention;
FIG. 4 is a schematic sectional view showing a structure for fixing a sealing material in another embodiment of the present invention; and
FIG. 5 is a schematic sectional view showing a structure for fixing a sealing material in still another embodiment of the present invention.

### EMBODIMENTS FOR CARRYING OUT THE INVENTION

Embodiments of the present invention are described in detail below with reference to the drawings.

### [Embodiment of the Present Invention]

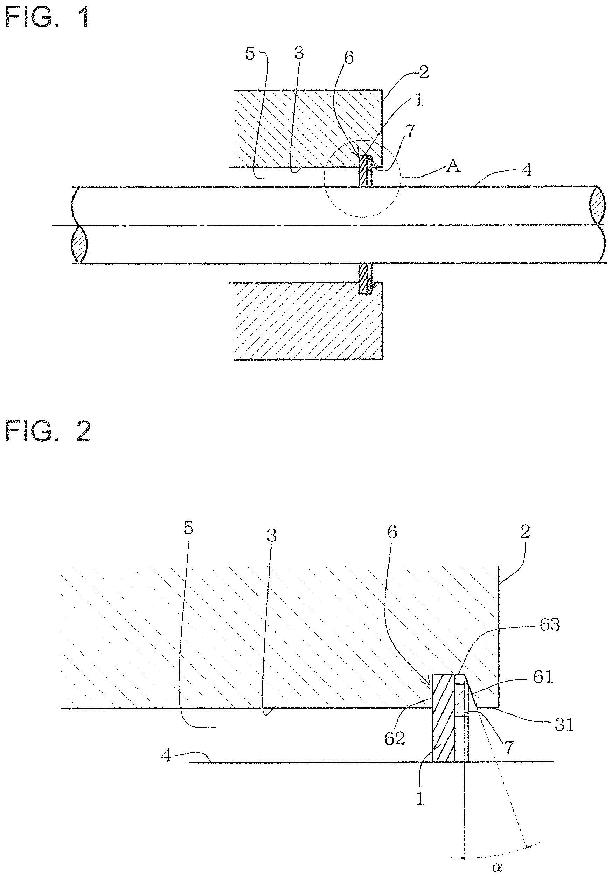

FIG. 1 shows a structure for fixing a sealing material in an embodiment of the present invention. FIG. 2 shows, in an enlarged dimension, a region indicated by alphabetic character A in FIG. 1. The structure for fixing the sealing material 1 seals a gap 5 between a hole 3 of a structure 2 and a bar-shaped shaft 4 designed to be inserted into the hole 3, thereby preventing foreign matter from entering the gap 5 and being discharged outside from the gap 5. The structure 2 denotes a part of a machine, apparatus, or another structure.

A circumferential surface of the hole 3 of the structure 2 is provided with a groove 6 to receive the sealing material 1. The groove 6 is formed over the entire circumferential surface close to an opening end 31 of the hole 3. An outer peripheral part of the sealing material 1 and a retaining ring 7 are inserted in this order from the opening end 31 of the hole 3 into the groove 6.

The sealing material 1 is, for example, one which is obtainable by forming an elastomer, such as rubber, into a ring shape. The elastomer has elastic property and thus makes it possible to fit the sealing material 1 into the groove 6 while elastically deforming the sealing material 1. Examples of the elastomer include elastomers, such as natural rubber, nitrile rubber, chloroprene rubber, hypalon, polybutadiene rubber, ethylene-propylene rubber (EPM), ethylene-propylene-diene rubber terpolymer (EPDM), hydrogenated acrylonitrile butadiene rubber (H-NBR), silicone rubber, fluoro rubber, acryl rubber, styrene butadiene rubber, chlorinated polyethylene rubber, millable urethane, thermosetting polyurethane, thermoplastic polyurethane, and thermoplastic polyester. One kind or two or more kinds of these are usable. A vulcanizing agent, a vulcanization accelerator, and a reinforcing agent may be blended with the elastomer constituting the sealing material 1. Examples of the vulcanizing agent include organic peroxides, such as dicumyl peroxide, organic sulfur compounds, and metal oxides. Examples of the vulcanization accelerator include fatty acids, such as stearic acid, and metal oxides. Examples of the reinforcing agent include carbon black and white carbon. Further, for example, an anti-aging agent, a filler, plasticizer, and pressure sensitive adhesive may be blended. Besides these, a solid lubricating agent, such as graphite, silicone oil, fluorine powder, and molybdenum disulfide, may be contained.

The sealing material 1 is preferably one in which fiber and an elastomer are integrated with each other. This makes it possible to reduce sliding resistance of the shaft 4 brought into contact with an inner surface of the sealing material 1. The fiber is mainly intended to contactedly slide along an outer circumferential surface of the shaft 4. The fiber becomes a main factor reducing the sliding resistance around the shaft 4.

Examples of the material of the fiber include polyamide fiber, aramid fiber, polyester fiber, carbon fiber, Teflon (registered trademark) fiber, liquid crystal polymer fiber, glass fiber, and cotton thread.

The fiber may be in the form of a fabric material, or the fiber in the form of short fibers may be mixed with the elastomer. Examples of the fabric material include woven fabric, knitted fabric, and non-woven fabric. Although a basis weight of the fabric material is usually 20-200 g/m2, no particular limitation is imposed thereon.

When the fiber form is a fabric material, the fabric material and the elastomer are integrated with each other so that the fabric material is brought into sliding contact with the outer circumferential surface of the shaft 4. In the form of short fibers, the sealing material 1 is obtainable by mixing the short fibers into the elastomer, followed by integral formation. A thickness of the sealing material 1 is not particularly limited, and the thickness may be appropriately determined, for example, according to a use application of the sealing material 1.

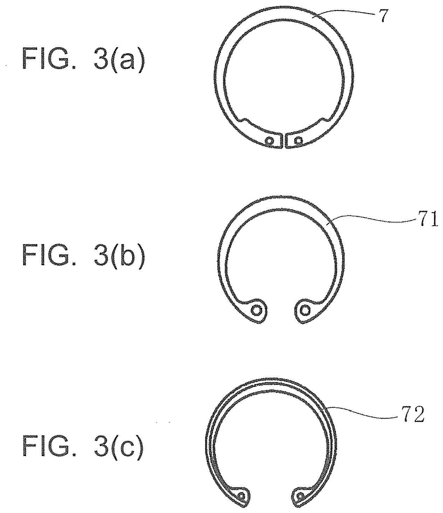

The retaining ring 7, which has elastic resiliency in a radially outward direction, is suitably usable. Examples of the retaining ring 7 include a retaining ring as shown in FIG. 3(a). When fitting the retaining ring 7 into the groove 6, the retaining ring 7 is inserted into the groove 6 in a state in which the diameter of the retaining ring 7 is reduced under pressure. Upon release of the pressure, the retaining ring 7 expands due to the elastic resiliency thereof, and is thus fitted into the groove 6. Hence, the retaining ring 7 becomes unremovable from the groove 6, thereby preventing the sealing material 1 from being removed from the groove 6.

Besides the retaining ring 7 shown in FIG. 3(a), conventionally well-known retaining rings 71 and 72 respectively shown in FIGs. 3(b) and 3(C) are also usable.

The groove 6 to receive the sealing material 1 and the retaining ring 7 includes an inclined surface 61 on the opening end side of the hole 3 so that a width along a longitudinal direction of the hole 3 decreases as going from an upper part of the groove 6 toward a bottom surface 63. The inclined surface 61 is obtainable by forming an inner surface of the groove 6 into a slope shape. Specifically, a width of the bottom surface 63 of the groove 6 is smaller than a thickness that is a sum of a thickness of the sealing material 1 and a thickness of the retaining ring 7. A width of the opening of the groove 6, which is provided on a circumferential surface of the hole 3, is made equal to or greater than the thickness that is the sum of the thickness of the sealing material 1 and the thickness of the retaining ring 7. Consequently, the retaining ring 7 designed to be inserted after the sealing material 1 into the groove 6 moves toward the sealing material 1 without reaching the bottom surface of the groove 6 as shown in FIG. 2. Accordingly, the sealing material 1 is pressed against an upright inner surface on the opposite side of the inclined surface 61, and is therefore stably fixable without looseness or the like.

Although no particular limitation is imposed on an inclination angle α of the inclined surface 61 of the groove 6, the inclination angle α is preferably approximately 15-45° with respect to a radial direction orthogonal to an axial direction of the shaft 4.

A method for fixing the sealing material 1 in the present embodiment is described below. A first step is to insert the sealing material 1 composed of an elastomer raw material into the groove 6 by using the elastic deformation of the sealing material 1. A subsequent step is to insert the retaining ring 7 into the groove 6. Here, because of the inclined surface 61 close to the opening end 31 of the groove 6, the retaining ring 7 moves toward the sealing material 1 and presses the sealing material 1 against the inner surface 62 on the opposite side of the groove 6.

Thus, the sealing material 1 is fixed by a frictional force of the sealing material 1 against the structure 2, and a spring force (elastic resiliency) of the retaining ring 7. Even when the thickness of the sealing material 1 varies with creep deformation due to long-term use, the sealing material 1 is stably fixable to the structure 2 over a long period of time because the sealing material 1 is being pressed all the time by the spring force of the retaining ring 7.

### [Another Embodiment]

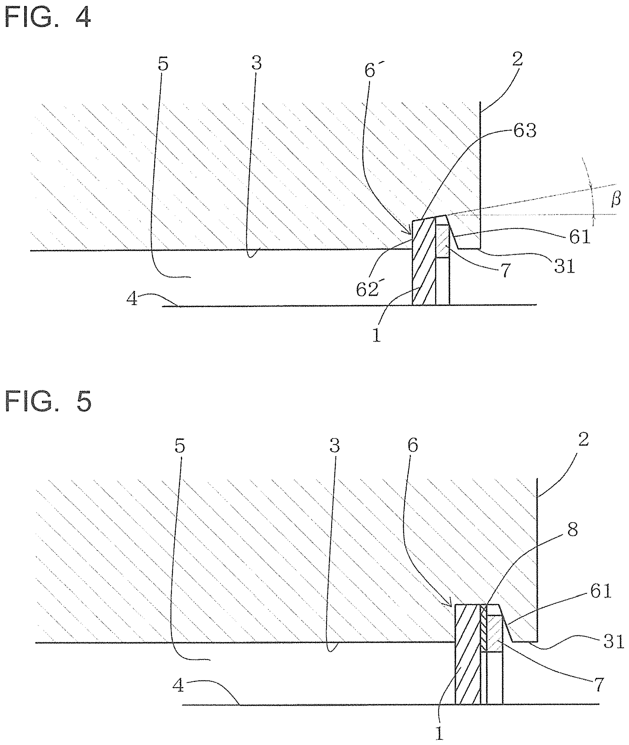

Another embodiment of the present invention is shown in FIG. 4. The same references have been retained for the same members as those shown in FIGs. 1 to 3, and their respective descriptions are omitted here.

In the present embodiment, a groove 6' formed on a circumferential surface of a hole 3 of a structure 2 includes an inclined surface 61 whose groove inner surface located close to an opening end 31 of the hole 3 is formed into a slope shape. Furthermore, a bottom surface 63 of the groove 6' is formed into a slope shape so that a groove depth increases in a direction from the opening end 31 of the hole toward the back.

Hence, in addition to a pressing force onto the sealing material 1 due to the fact the inclined surface 61 close to the opening end 31 is formed into the slope shape, the sealing material 1, whose circumferential surface is in contact with the bottom surface 63 of the inclined groove 6', becomes easier to move to an inner surface 62' on the opposite side of the groove 6', thus making it possible to apply a still greater pressing force. Others are similar to those in the foregoing embodiment.

An inclination angle β of the bottom surface 63 of the groove 6' is preferably approximately 5-35° with respect to the axial direction of a shaft 4.

### [Still Another Embodiment]

Still another embodiment of the present invention is shown in FIG. 5. The same references have been retained for the same members as those shown in FIGs. 1 to 3, and their respective descriptions are omitted here.

A structure for fixing a sealing material in the present embodiment is one in which a sliding ring 8 is interposed between a sealing material 1 and a retaining ring 7. Examples of the sliding ring 8 include film-shaped or sheet-shaped rings composed of fluororesin, polyacetal resin, polyamide resin, or the like.

By interposing the sliding ring 8 between the sealing material 1 and the retaining ring 7, the retaining ring 7 can be smoothly fitted into the groove 6. Additionally, the sliding ring 8 is relatively thin, and it is therefore easy to fit the sliding ring 8 into the groove 6 by using elastic deformation of the sliding ring 8.

Although no particular limitation is imposed on a thickness of the sliding ring 8, the thickness of the sliding ring 8 is preferably set so that a width of a bottom surface of the groove 6 is smaller than a thickness that is a sum of a thickness of the sealing material 1, a thickness of the retaining ring 7, and a thickness of the sliding ring 8, and so that a width of an opening of the groove 6, which is located on a circumferential surface of the hole 3, is equal to or greater than the thickness that is the sum of the thickness of the sealing material 1, the thickness of the retaining ring 7, and the thickness of the sliding ring 8. Accordingly, as in the case in the foregoing embodiment, the retaining ring 7 moves through the sliding ring 8 toward the sealing material 1 without reaching the bottom surface of the groove 6. Consequently, the sealing material 1 is pressed against an upright inner surface on the opposite side of the inclined surface 61, and is therefore stably fixable without looseness or the like.

### INDUSTRIAL APPLICABILITY

The structure and method for fixing the sealing material according to the present invention are suitably applicable to driving apparatuses for the purpose of handling powders and liquids.

### DESCRIPTION OF THE REFERENCE NUMERAL

- 1: sealing material
- 2: structure
- 3: hole
- 4: shaft
- 5: gap
- 6: groove
- 7, 71, 72: retaining ring
- 61: inclined surface
- 63: bottom surface

## Claims

1. A structure for fixing a sealing material intended to seal a gap between a hole of a structure and a shaft designed to be inserted into the hole, the structure comprising:
a groove formed on a circumferential surface of the hole of the structure and designed for fitting the sealing material;
a sealing material whose outer peripheral part is inserted into the groove; and
a retaining ring being inserted into the groove into which the outer peripheral part of the sealing material is inserted,
wherein the outer peripheral part of the sealing material and the retaining ring are inserted in this order from an opening end side of the hole of the structure into the groove, and
wherein the groove comprises an inclined surface on the opening end side of the hole so that a width along a longitudinal direction of the hole decreases in a direction from a groove upper part located close to the circumferential surface of the hole toward a groove bottom surface.

2. The structure for fixing a seaming material according to claim 1, wherein a width of a bottom surface of the groove is smaller than a thickness that is a sum of a thickness of the sealing material and a thickness of the retaining ring, and a width of an opening of the groove which is provided on a circumferential surface of the hole is equal to or greater than the thickness that is the sum of the thickness of the sealing material and the thickness of the retaining ring.

3. The structure for fixing a seaming material according to claim 1 or 2, wherein the bottom surface of the groove is formed into a slope shape so that a groove depth increases in a direction from the opening end side of the hole toward a back.

4. The structure for fixing a sealing material according to any one of claims 1 to 3, wherein the retaining ring has elastic resiliency in a radially outward direction.

5. The structure for fixing a sealing material according to any one of claims 1 to 4, wherein a sliding ring is interposed between the sealing material and the retaining ring.

6. The structure for fixing a sealing material according to claim 5, wherein a width of a bottom surface of the groove is smaller than a thickness that is a sum of a thickness of the sealing material, a thickness of the retaining ring, and a thickness of the sliding ring, and a width of an opening of the groove which is provided on a circumferential surface of the hole is equal to or greater than the thickness that is the sum of the thickness of the sealing material, the thickness of the retaining ring, and the thickness of the sliding ring.

7. A method for fixing a sealing material intended to seal a gap between a hole of a structure and a shaft designed to be inserted into the hole, the method comprises:
inserting an outer peripheral part of the sealing material and a retaining ring in this order from an opening end side of the hole of the structure into a groove formed on a circumferential surface of the hole of the structure,
wherein the groove comprises an inclined surface on the opening end side of the hole so that a width along a longitudinal direction of the hole decreases in a direction from a groove upper part located close to the circumferential surface of the hole toward a groove bottom surface.
